# EUROPEAN PATENT SPECIFICATION

(11) **EP 2 270 097 B1**
(45) Date of publication and mention of the grant of the patent: **20.07.2016**
(21) Application number: 09724737.3
(22) Date of filing: 26.03.2009
(51) Int. Cl.: C08L 77/00, B29C 45/16, C08L 77/10, C08L 93/04

(54) **POLYAMIDE RESIN COMPOSITION**
POLYAMIDHARZZUSAMMENSETZUNG
COMPOSITION DE RÉSINE DE POLYAMIDE

(30) Priority: 28.03.2008 JP 2008088011; 28.03.2008 JP 2008088012; 19.05.2008 JP 2008130946; 19.05.2008 JP 2008130947; 26.09.2008 JP 2008248734; 26.09.2008 JP 2008248735
(43) Date of publication of application: 05.01.2011
(73) Proprietor: Ube Industries, Ltd., Ube-shi Yamaguchi 755-8633 (JP)
(72) Inventor: SAKAMOTO, Naoki, Ube-shi Yamaguchi 755-8633 (JP); NONAKA, Hirofumi, Ube-shi Yamaguchi 755-8633 (JP); KODAMA, Hitoshi, Ube-shi Yamaguchi 755-8633 (JP)
(74) Representative: Gille Hrabal
(86) International application number: PCT/JP2009/056162
(87) International publication number: WO 2009/119759

(56) References cited:
- EP-A1- 1 241 229
- EP-A1- 1 767 578
- WO-A1-2007/046541
- JP-A- 11 315 221
- JP-A- 2002 030 214
- JP-A- 2002 338 803
- JP-A- 2003 246 028
- JP-A- 2006 008 160
- JP-T- 2005 529 009

## Description

### [Technical Field]

The present invention relates to a polyamide resin composition having excellent fuel permeation resistance for use in the weld zone of fuel tanks and the like, to a method for producing it, and to a fuel part comprising it.

### [Background Art]

Heretofore, for safety and environmental measures, it is desired to reduce fuel evaporation from the wall and the connection of fuel tanks and their accessories, etc. For example, in the automotive field, a monolayer-structured fuel tank formed of high-density polyethylene (HDPE) resin has become widely used, which is produced according to a blow molding method. For such an HDPE resin-made fuel tank, various methods have been proposed for the purpose of reducing the fuel permeation through the tank body, for example, a method of sulfonation of the HDPE resin (see Patent Reference 1), a method of fluorine treatment thereof, a method of producing a blow-molded body having a multilayer structure with a gas-barrier resin (see Patent Reference 2), a method of dispersing a gas-barrier resin such as polyamide or the like as flakes in a continuous matrix phase of polyethylene (see Patent Reference 3).

In particular, recently, a multilayer-structured, resin-made fuel tank is being popular, which comprises an outer layer of an HDPE resin on the outer side of the fuel tank and comprises an inner layer of a polyamide resin or an ethylene/vinyl alcohol copolymer having excellent fuel gas barrier properties on the inner side of the fuel tank.

Fuel parts comprising a crystalline polyamide resin having a terminal amino group concentration which is higher than the concentration of the terminal carboxy group have been described in Patent Reference 4.

However, even though the fuel permeation through the fuel tank body is reduced according to the above-mentioned methods or the like, the permeation through various parts attached to the fuel tank (for example, valves and others) is still large, and therefore this is a bar to reducing the evaporation from the entire fuel part.

This is because various parts attached to a fuel tank are produced of high-density polyethylene, which is the same material as that of the fuel tank, in order to have a sufficient adhesion strength to the fuel tank, but the high-density polyethylene has poor fuel permeation resistance.

In that situation, some investigations have been made for producing various parts attached to a fuel tank with a polyamide resin or the like having excellent fuel permeation resistance; naturally, however, HDPE resin and polyamide resin have poor adhesiveness to each other, and therefore there is a problem in that the part formed of a polyamide resin could not have a sufficient adhesion strength to the fuel tank body formed of an HDPE resin.

[Patent Reference 1] JP-B 46-23914
[Patent Reference 2] JP-B 55-49989
[Patent Reference 3] JP-B 60-14695
[Patent Reference 4] EP 1 241 229 A1

### [Disclosure of the Invention]

### [Problems that the Invention is to Solve]

An object of the present invention is to solve the above-mentioned problems and to provide a polyamide resin composition having excellent fuel permeation resistance in the weld zone of fuel tanks and the like, a method for producing it, and a fuel part comprising it.

### [Means for Solving the Problems]

Specifically, the first aspect of the present invention is a polyamide resin composition comprising at least 85% by weight of an aliphatic polyamide resin (A-1) in which the concentration of the terminal amino group is higher than the concentration of the terminal carboxy group, from 0.01 to 10% by weight of talc (B) dispersed in the aliphatic polyamide resin (A-1), and from 0.0001 to 1% by weight of a dispersing agent (C).

The second aspect of the present invention is a method for producing a polyamide resin composition, which comprises mixing from 0.01 to 10% by weight of talc (B) and from 0.0001 to 1% by weight of a dispersing agent (C), followed by mixing it with at least % by weight of an aliphatic polyamide resin (A-1) in which the concentration of the terminal amino group is higher than the concentration of the terminal carboxy group.

The third aspect of the present invention is a polyamide resin composition comprising from 75 to 95% by weight of an aliphatic polyamide resin (A-1) in which the concentration of the terminal amino group is higher than the concentration of the terminal carboxy group, from 1 to 20% by weight of an aromatic polyamide resin (A-2), from 0.01 to 10% by weight of talc (B) dispersed in the polyamide resins (A-1) and (A-2), and from 0.0001 to 1% by weight of a dispersing agent (C).

The fourth aspect of the present invention is a method for producing a polyamide resin composition, which comprises mixing from 0.01 to 10% by weight of talc (B) and from 0.0001 to 1% by weight of a dispersing agent (C), followed by mixing it with from 75 to 95% by weight of an aliphatic polyamide resin (A-1) in which the concentration of the terminal amino group is higher than the concentration of the terminal carboxy group and from 1 to 20% by weight of an aromatic polyamide resin (A-2).

The fifth aspect of the present invention is a fuel part comprising the polyamide resin composition of the first or third aspect of the present invention; and the sixth aspect of the present invention is a fuel part in which the polyamide resin composition of the first or third aspect of the present invention is welded to a modified polyolefin resin modified with an unsaturated carboxylic acid or its derivative.

### [Advantage of the Invention]

The polyamide resin composition of the present invention has excellent adhesion strength to polyolefin resin and the like and excellent fuel gas barrier properties, not detracting from the properties inherent to polyamide resins.

The fuel part comprising the polyamide resin composition of the present invention has excellent fuel permeation resistance in the weld zone or the like of a fuel tank or the like in a multicolor (bicolor) molding method, and is favorably used as a fuel part of automobiles and others for a long period of time.

According to the method of the present invention, the polyamide resin composition and the fuel part having the above-mentioned properties can be produced efficiently.

### [Brief Description of the Drawing]

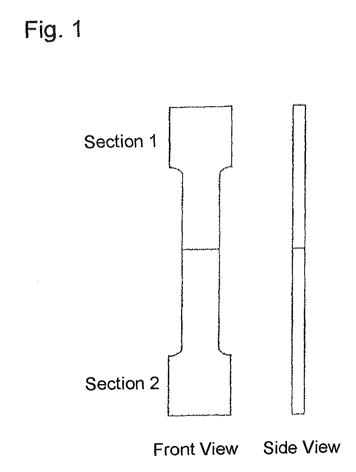

[Fig. 1] Fig. 1 is a view showing the shape of a test piece for adhesion strength evaluation.

### [Best Mode for Carrying out the Invention]

### [Polyamide Resin Composition]

The polyamide resin composition of the present invention comprises (i) at least 85% by weight of an aliphatic polyamide resin (A-1) in which the concentration of the terminal amino group is higher than the concentration of the terminal carboxy group, from 0.01 to 10% by weight of talc (B) dispersed in the aliphatic polyamide resin (A-1), and from 0.0001 to 1% by weight of a dispersing agent (C), or (ii) from 75 to 95% by weight of an aliphatic polyamide resin (A-1) in which the concentration of the terminal amino group is higher than the concentration of the terminal carboxy group, from 1 to 20% by weight of an aromatic polyamide resin (A-2), from 0.01 to 10% by weight of talc (B) dispersed in the polyamide resins (A-1) and (A-2), and from 0.0001 to 1% by weight of a dispersing agent (C).

The ingredients for use in the polyamide resin composition of the present invention, the production method for the polyamide resin composition, the fuel part comprising the polyamide resin composition, and the production method for the fuel part are described in order.

### [Aliphatic Polyamide Resin (A-1)]

In the aliphatic polyamide resin (A-1) for use in the present invention, the concentration of the terminal amino group is higher than the concentration of the terminal carboxy group. In this, the concentration of the terminal amino group is higher than the concentration of the terminal carboxy group, and therefore, when the resin composition is welded to a polyolefin resin, it has excellent adhesion strength and exhibits excellent fuel permeation resistance. In particular, in case where a modified polyolefin resin modified with an unsaturated carboxylic acid or its derivative is used, the adhesion strength is especially excellent and excellent fuel permeation resistance can be exhibited. The terminal amino group concentration in the aliphatic polyamide resin (A-1) is preferably at least 50 milliequivalents per kg of the polymer, more preferably at least 60 milliequivalents, even more preferably at least 70 milliequivalents, still more preferably at least 80 milliequivalents.

The aliphatic polyamide resin (A-1) may be a homopolymer, a copolymer, or a blend with one or more of them, so far as the terminal amino group concentration is higher than the terminal carboxyl group concentration therein. The ratio of the concentration (milliequivalent/kg) of (terminal amino group/terminal carboxyl group) in the aliphatic polyamide resin (A-1) is preferably at least 1.1, more preferably at least 1.5, even more preferably at least 2.0.

The blend ratio of the aliphatic polyamide resin (A-1) for use in the present invention is at least 85% by weight of the entire polyamide resin composition, preferably at least 90% by weight, more preferably at least 95% by weight.

The aliphatic polyamide resin (A-1) is preferably (i) a polyamide resin comprising an aliphatic diamine having from 4 to 12 carbon atoms and an aliphatic dicarboxylic acid having from 6 to 12 carbon atoms, (ii) a polyamide resin comprising a lactam having from 6 to 12 carbon atoms, or (iii) a polyamide resin comprising an aminocarboxylic acid having from 6 to 12 carbon atoms.

### (Aliphatic Diamine and Aliphatic Dicarboxylic Acid)

Specific examples of the aliphatic diamine include tetramethylenediamine, hexamethylenediamine, octamethylenediamine, nonamethylenediamine, undecamethylenediamine, dodecamethylenediamine, etc.

Specific examples of the aliphatic dicarboxylic acid include adipic acid, heptane-dicarboxylic acid, octane-dicarboxylic acid, nonane-dicarboxylic acid, undecane-dicarboxylic acid, dodecane-dicarboxylic acid, etc.

Of those, a preferred combination of the aliphatic diamine and the aliphatic dicarboxylic acid is a combination of an equimolar salt of hexamethylenediamine and adipic acid.

### (Lactam and Aminocarboxylic Acid)

Specific examples of the lactam include α-pyrrolidone, ε-caprolactam, ω-laurolactam, ε-enantolactam, etc.; and specific examples of the aminocarboxylic acid include 6-aminocaproic acid, 7-aminoheptanoic acid, 11-aminoundecanoic acid, 12-aminododecanoic acid, etc.

Of those, preferred are 6-aminocaproic acid, 12-aminododecanoic acid, ε-caprolactam, laurolactam.

One or more of the above-mentioned aliphatic diamines, aliphatic dicarboxylic acids, lactams and aminocarboxylic acids may be used here either singly or as combined.

Specific examples of the aliphatic polyamide resin formed of the above-mentioned monomer ingredients include nylon 6, nylon 66, nylon 12.

### (Production of Aliphatic Polyamide Resin (A-1))

The production method for the aliphatic polyamide resin (A-1) in which the terminal amino group concentration is higher than the terminal carboxy group concentration is not specifically defined. For example, there are mentioned (i) a method for producing it through polymerization or copolymerization of a starting aliphatic polyamide material according to a known method of melt polymerization, solution polymerization, solid-phase polymerization or the like in the presence of an amine; (ii) a method comprising producing an aliphatic polyamide resin and then melt-kneading it in the presence of an amine. In that manner, an amine may be added to the system basically in any stage during polymerization or after polymerization or in any stage during melt kneading; however, from the viewpoint of increasing the adhesion strength of the resin composition, the amine is preferably added in the stage of polymerization.

The amine includes monoamines, diamines and triamines; and diamines are preferred. Examples of the diamines include those mentioned hereinabove as monomers for production of polyamide resin, as well as aliphatic diamines such as methylenediamine, ethylenediamine, trimethylenediamine, etc.; aromatic diamines such as naphthalenediamine, metaxylylenediamine, etc. Of those, more preferred are hexamethylenediamine, dodecamethylenediamine, metaxylylenediamine.

Not overstepping the range of the terminal group concentration ratio as above and if desired, carboxylic acids such as monocarboxylic acids, dicarboxylic acids, tricarboxylic acids and the like may be added to the system.

As the polymerization apparatus, for example, preferred are a batch-type reactor, a single-tank or multi-tank continuous polymerization apparatus, a tubular continuous polymerization apparatus, a kneading reaction extruder, etc.

### [Aromatic Polyamide Resin (A-2)]

The aromatic polyamide resin (A-2) for use in the present invention is an aromatic polyamide resin containing at least one aromatic monomer ingredient. For example, this is an aromatic polyamide resin produced through polycondensation of starting materials of an aromatic diamine and an aliphatic dicarboxylic acid, or an aliphatic diamine and an aromatic dicarboxylic acid.

The aliphatic dicarboxylic acid as the starting material is preferably an aliphatic dicarboxylic acid having from 6 to 12 carbon atoms; and the aliphatic diamine is preferably an aliphatic diamine having from 4 to 12 carbon atoms. Their specific examples are the same as those mentioned for the aliphatic polyamide resin (A-1).

The aromatic diamine includes metaxylylenediamine, paraxylylenediamine, etc.; and the aromatic dicarboxylic acid includes naphthalenedicarboxylic acid, terephthalic acid, isophthalic acid, phthalic acid, etc.

Of those, a preferred combination of the aliphatic diamine and the aromatic dicarboxylic acid is a combination of an equimolar salt of hexamethylenediamine and terephthalic acid.

Specific examples of the aromatic polyamide resin (A-2) include polynonanemethyleneterephthalamide (polyamide 9T), polyhexamethyleneterephthalamide (polyamide 6T), polyhexamethylenisophthalamide (polyamide 6I), polyhexamethylenadipamide/polyhexamethyleneterephthalamide copolymer (polyamide 66/6T), polyhexamethyleneterephthalamide/polycapramide copolymer (polyamide 6T/6), polyhexamethylenadipamide/polyhexamethylenisophthalamide copolymer (polyamide 66/6I), polyhexamethylenisophthalamide/polycapramide copolymer (polyamide 6I/6), polydodecamide/polyhexamethyleneterephthalamide copolymer (polyamide 12/6T), polyhexamethylenadipamide/polyhexamethyleneterephthalmide/polyhe xamethylenisophthalamide copolymer (polyamide 66/6T/6I), polyhexamethylenadipamide/polycarpamide/polyhexamethylenisophtha lamide copolymer (polyamide 66/6/6I), polyhexamethyleneterephthalamide/polyhexamethylenisophthalamide copolymer (polyamide 6T/6I), polyhexamethyleneterephthalamide/poly(2-methylpentamethylenetere phthalamide) copolymer (polyamide 6T/M5T), polyxylylenadipamide (polyamide MXD6), and their mixtures and copolymer resins, etc. In the formulae, T means terephthalic acid, and I means isophthalic acid.

As the aromatic polyamide resin (A-2) for use in the present invention, an amorphous aromatic copolyamide resin containing at least two aromatic monomer ingredients is especially useful. The amorphous aromatic copolyamide resin preferably has a glass transition temperature of not lower than 100°C in terms of the peak temperature of the loss elastic modulus in absolute dry as determined through measurement of the dynamic viscoelasticity. The term "amorphous" as referred to herein means that the quantity of crystal melting heat of the substance, as measured with a differential scanning calorimeter (DSC), is at most 1 cal/g.

The amorphous aromatic copolyamide resin preferably comprises from 40 to 95 mol% of a terephthalic acid ingredient unit and from 5 to 60 mol% of an isophthalic acid ingredient unit, and an aliphatic diamine. Preferred is a combination of an equimolar salt of hexamethylenediamine and terephthalic acid and an equimolar salt of hexamethylenediamine and isophthalic acid.

Also preferred is one comprising from 99 to 60% by weight of polyamide-forming ingredients of an aliphatic diamine, and isophthalic acid and terephthalic acid, and from 1 to 40% by weight of an aliphatic polyamide ingredient.

The degree of polymerization of the aromatic polyamide resin (A-2) in the present invention is not specifically defined. Preferably, the relative viscosity of the resin, as measured in 98% sulfuric acid having a resin concentration of 1% at a temperature of 25°C according to JIS K 6810, is from 1.5 to 4.0, more preferably from 1. 8 to 3.0. When the relative viscosity is low, then the material strength may be low; but on the contrary, when too high, the flowability of the resin composition may be low and if so, the moldability of the resin composition would be poor and the product appearance would be poor.

The blend ratio of the aromatic polyamide resin (A-2) for use in the present invention is, as combined with the aliphatic polyamide resin (A-1), from 1 to 20% by weight of the entire polyamide resin composition, preferably from 5 to 15% by weight. When the blend ratio of the aromatic polyamide resin (A-2) is less than 1% by weight, then it is unfavorable since the effect for enhancing the alcohol gasoline permeation resistance would not be sufficient; but on the contrary, when more than 20% by weight, then it is also unfavorable since the alcohol gasoline permeation resistance may rather worsen.

### [Talc (B)]

Talc (B) in the present invention is a mineral comprising magnesium hydroxide and a silicate salt, and is a type of a clay mineral. Preferably, talc (B) is kneaded along with the dispersing agent (C) by the use of a double-screw extruder or the like, and is thereby uniformly dispersed in the polyamide resin or the polyamide resin composition.

Preferably, the average particle size of talc (B) is from 0.1 to 20 µm, more preferably from 0.2 to 10 µm, even more preferably from 0.5 to 5 µm.

Also preferably, the aspect ratio (average diameter/ average thickness of tabular particle) of talc (B) is at least 3, more preferably from 4 to 100, even more preferably from 5 to 50, still more preferably from 6 to 40.

For enhancing the adhesiveness between talc (B) and the aliphatic polyamide resin (A-1) and the aromatic polyamide resin (A-2), preferably, the talc surface is treated with a treating agent of a silicone compound, an amino acid compound, a fluorine compound or the like. The surface-treating agent includes functional group-having silanes such as aminosilanes, etc.; and other compounds such as cyclic oligosiloxanes, organohalosilanes, alkylsilazanes, etc.

The content of talc (B) is from 0.01 to 10% by weight, preferably from 0.1 to 9% by weight, more preferably from 0.5 to 8% by weight, even more preferably from 1 to 5% by weight. When the content of talc (B) is lower than 0.01% by weight, it is unfavorable since the adhesion strength-increasing effect could not be attained; but when more than 10% by weight, it is also unfavorable since the polyamide layer would be brittle and the polyamide layer would undergo cohesion failure though the interfacial welding strength could increase.

### [Dispersing Agent (C)]

The dispersing agent (C) in the present invention is a rosin.

The amount of the rosin as the dispersing agent (C) to be added is from 0.0001 to 1% by weight, preferably from 0.001 to 0.5% by weight, more preferably from 0.001 to 0.1% by weight. When the amount of the dispersing agent (C) added is less than 0.0001% by weight, then the adhesiveness may be insufficient; but when more than 1% by weight, it may have an adverse effect (waxy effect) on the weld zone of fuel tanks and others and the weld strength may therefore lower.

### (Rosin)

Rosins are diterpene acid compounds referred to as resin acids (rosin acids), and include natural rosins, modified rosins, polymer rosins.

Natural rosins are mixtures of resin acids collected from pinaceous plants; and are divided into gum rosin, wood rosin, tall oil rosin and the like depending on the production method. The main ingredient of resin acid is abietic acid having three ring structures, a conjugated diene bond and a carboxyl group, and includes neoabietic acid, dehydroabietic acid, palustric acid, pimaric acid, isopimaric acid, sandaracopimaric acid, levopimaric acid, etc.

Modified rosins include hydrides of rosins, or that is, rosin hydrides such as dihydroabietic acid, tetrahydroabietic acid, etc.; disproportionates of rosins, or that is rosin disproportionates such as dehydroabietic acid, dihydroabietic acid, etc.; acid-modified rosins modified with acrylic acid, maleic acid, fumaric acid or the like; rosin esters such as natural rosin esters, modified rosin esters, polymer rosin esters, etc.

Polymer rosins include dimers and trimers of the above-mentioned natural rosins (especially abietic acid), or the above-mentioned modified rosins.

### [Production Method for Polyamide Resin Composition]

The production method for the polyamide resin composition of the present invention is not specifically defined. In this method, talc (B) and a rosin as the dispersing agent (C) are previously mixed and formed into granular pellets of talc coated with the dispersing agent (C), and then uniformly mixed with a polyamide resin (A-1) or polyamide resins (A-1) and (A-2).

The polyamide resin composition of the present invention may be used, directly as it is, for a material for fuel parts; but not detracting from the object of the present invention, any other thermoplastic resin as well as functionalizing agents such as heat-resistant agent, weather-resistant agent, crystal nucleating agent, crystallization promoter, mold release agent, lubricant, antistatic agent, flame retardant, flame retardation promoter, colorant and the like may be added thereto.

Specific examples of other thermoplastic resins that are usable concurrently here include general resin materials such as polyethylene, polypropylene, polystyrene, ABS resin, AS resin, acrylic resin, etc.; and polycarbonate, polyphenylene oxide, polyethylene terephthalate, polybutylene terephthalate, polyphenylene sulfide, and other highly heat-resistant resins. Especially in case where polyethylene or polypropylene is used concurrently, preferably it is modified with maleic anhydride, a glycidyl group-having monomer or the like.

### [Fuel Part Comprising Polyamide Resin Composition]

The fuel part of the present invention comprises the above-mentioned polyamide resin composition. In the fuel part, the polyamide resin composition may be welded to a modified polyolefin resin modified with an unsaturated carboxylic acid or its derivative. The fuel part has excellent fuel permeation resistance.

In the present invention, the fuel part is a concept including a fuel tank body having, as formed inside it, a space for housing fuel therein, and accessories attached to the fuel tank body, such as valves, fuel hose joints, canister connection nozzles, separators, etc.

In the fuel part comprising the polyamide resin composition of the present invention, preferably, a modified polyolefin resin modified with an unsaturated carboxylic acid or its derivative is used as the adhesive layer in jointing the fuel tank body and accessories thereto.

For producing the fuel part, preferably employed is a method comprising molding a modified polyolefin resin modified with an unsaturated carboxylic acid or its derivative, then injection-molding the above-mentioned polyamide resin composition thereto, and welding the two.

### (Modified Polyolefin Resin)

The modified polyolefin resin includes graft polymers produced by graft polymerization of polyethylene, ethylene/α-olefin copolymer, ethylene/α,β-unsaturated carboxylate copolymer or ethylene/vinyl acetate partial saponificate copolymer, with an unsaturated carboxylic acid or its derivative.

The ethylene/α-olefin copolymer is a polymer produced through copolymerization of ethylene with an α-olefin having at least 3 carbon atoms; and the α-olefin having at least 3 carbon atoms includes propylene, butene-1, hexene-1, decene-1, 4-methylbutene-1, 4-methylpentene-1, etc. Preferred are propylene and butene-1.

The ethylene/α,β-unsaturated carboxylate copolymer is a polymer produced through copolymerization of ethylene with an α,β-unsaturated carboxylate monomer; and the α,β-unsaturated carboxylate monomer includes acrylates such as methyl acrylate, ethyl acrylate, propyl acrylate, butyl acrylate, etc.; and methacrylates such as methyl methacrylate, ethyl methacrylate, propyl methacrylate, butyl methacrylate, etc. Of those, preferred are ethylene/ethyl acrylate copolymer and ethylene/methyl methacrylate copolymer as available inexpensively and excellent in thermal stability.

The ethylene/vinyl acetate partial saponificate copolymer is a compound produced through partial saponification of an ethylene/vinyl acetate copolymer. The ethylene/vinyl acetate partial saponificate copolymer can be produced according to a known method of saponification of an ethylene/vinyl acetate copolymer, for example, according to a method of treating the copolymer with a system comprising a low-boiling point alcohols such as methanol, ethanol or the like and an alkali such as sodium hydroxide, potassium hydroxide, sodium methylate or the like.

The unsaturated carboxylic acid or its derivative for graft polymerization includes unsaturated carboxylic acids such as acrylic acid, methacrylic acid, ethacrylic acid, maleic acid, fumaric acid, itaconic acid, citraconic acid, nadic acid or the like, and their derivatives such as acid halides, amides imides, anhydrides, esters, etc. Specific examples of the derivatives include malenyl chloride, maleimide, maleic anhydride, monomethyl maleate, dimethyl maleate, etc. Of those, preferred are unsaturated dicarboxylic acids and their anhydrides; and more preferred are maleic acid, itaconic acid, nadic acid and their acid anhydrides.

The degree of acid modification of the modified polyolefin is not specifically defined. From the viewpoint of increasing the adhesiveness, the acid amount may be from 0.01 to 5 parts by weight relative to 100 parts by weight of the polyolefin resin, more preferably from 0.1 to 3 parts by weight.

The modified polyolefin resin may be produced in any known production method, for example, according to a method of reacting an unmodified polyolefin resin and an unsaturated carboxylic acid in melt, a method of reacting them in solution, a method of reacting them in slurry, a method of reacting them in vapor or the like.

### (Welding Method)

In producing the fuel part of the present invention, preferably, the above-mentioned modified polyolefin resin is molded, then the above-mentioned polyamide resin composition is injection-molded and the two are welded, and thereafter accessory parts are welded to the modified polyolefin resin so as to be jointed to the fuel tank.

Specific examples of the welding method includes a vibration welding method, an injection welding method of die slide injection (DSI), die rotary injection (DRI), bicolor molding or the like, an ultrasonic welding method, a spin welding method, a hot plate welding method, a heat ray welding method, a laser welding method, a high-frequency induction welding method, etc.

The molding resin temperature in welding according to the injection welding method of DSI, DRI, bicolor molding or the like is preferably from 250°C to 320°C, more preferably from 270°C to 300°C. The mold temperature in the method is preferably from 30°C to 120°C, more preferably from 50°C to 100°C.

### [Examples]

Examples and Comparative Examples are shown below to concretely describe the present invention; however, the present invention should not be limited to these. The physical properties of the molded articles in Examples and Comparative Examples were measured in the manner mentioned below.
(1) Measurement of Terminal Amino Group Concentration of Polyamide Resin:
   One gram of a polyamide resin was put into an Erlenmeyer flask with a stopper cock, then 40 mL of a previously-prepared solvent (phenol/methanol = 9/1 by volume) was put into it, and stirred and dissolved by a magnet stirrer; and using thymol blue as an indicator, this was titered with 0.02 N hydrochloric acid to determine the terminal amino group concentration.
(2) Measurement of Terminal Carboxy Group Concentration of Polyamide Resin:
   One gram of a polyamide resin was put into a three-neck pear-shaped flask, then 40 mL of benzyl alcohol was added thereto, and dipped in an oil bath set at 180°C in a nitrogen current atmosphere. With the stirring motor fitted to its top, this was stirred and dissolved; and using phenolphthalein as an indicator, this was titered with 0.05 N sodium hydroxide solution to determine the terminal carboxy group concentration.
(3) Fuel Permeation Coefficient:
   According to JIS Z0208, a test sample of a film was prepared by pressing at 250°C, which had been so controlled that its average thickness, as determined by averaging the data of the thickness at around 10 points selected at random, could be about 0.1 mm, and in a liquid phase state with little pressure given to the swollen sample (filled with fuel), this was subjected to a fuel permeation test for a test period of from 24 to 48 hours under the condition of a test atmosphere temperature of 60°C.

   As the fuel, used was CE-10 (mixed fuel prepared by mixing 10% ethanol in Fuel C of isooctane/toluene = 1/1 by volume). The sample for the fuel penetration test was dipped in the fuel in such a manner that the penetrative face thereof could face upward so as to be all the time kept in contact with the fuel, and tested for fuel penetration according to JIS Z0208.
(4) Tensile Strength:
   According to ASTM D638, a No. 1 sample piece having a thickness of 3.2 mm was tested at a tension rate of 5 mm/min.
(5) Initial Adhesion Strength:
   A section 1 and a section 2 were melt-welded at their interface in injection welding to produce one test piece having the shape as in Fig. 1.

   The test piece was produced as follows: First, a metal piece having the shape of the section 2 of Fig. 1 was inserted into a mold, and then the section 1 was formed of a modified high-density polyethylene modified with maleic anhydride (Nippon Polyethylene's ADTEX T-13". Next, the section 1 was fully cooled, and inserted into the mold, and using a polyamide resin composition to be tested, the part of the section 2 was formed to give a welded (welding temperature: 290°C) test piece. The test piece was tested at a tension rate of 5 mm/min to measure the maximum tension strength thereof until the two sections could peel at the interface or until the test piece could break at any other site than the interface (substrate fracture) ; and the strength is the initial adhesion strength.
(6) Adhesion Strength after Immersion in Fuel:
   A test piece was prepared according to the same process as that for the test piece for initial adhesion strength measurement, and this was put in an autoclave. A mixed fuel of Fuel C + 10% ethanol was introduced into the autoclave until the test piece could be fully immersed therein, and this was sealed up. The autoclave was left in a hot water tank at 60°C for 400 hours or 1000 hours. Subsequently, the test piece was taken out, and tested for the tensile strength. Thus tested, the maximum tensile strength of the test piece is the adhesion strength thereof after immersion in fuel.

### Example I-1:

(1) Production of Aliphatic Polyamide Resin I-1:
   20 kg of a polymerization monomer, ε-caprolactam, 0.5 kg of water, 200 g of and 70 g of hexamethylenediamine were put into a 70-liter autoclave, purged with nitrogen, then heated up to 100°C and stirred to give a uniform mixture. Next, this was further stirred at 260°C under 1.7 MPa for 1 hour. Subsequently, the pressure was discharged and, with evaporating moisture from the reactor, this was kept polymerized under normal pressure for 3 hours. After the reaction, the polymer was taken out as strands from the lower nozzle of the reactor, then cooled and cut into polyamide resin pellets. The obtained pellets were processed in hot water at 100°C to remove the unreacted monomer through extraction, and then dried in vacuum to be a sample.

   The terminal amino group concentration of the obtained polyamide 6 was 100 milliequivalent/kg, and the terminal carboxy group concentration thereof was 30 milliequivalent/kg. The aliphatic polyamide resin in which the terminal amino group concentration is higher than the terminal carboxy group concentration is a resin I-1.
(2) Production of Polyamide Resin Composition:
   0.7% by weight of Harima Chemicals' granular talc HT-7000 (97.5% by weight of powdery talc having an average particle size of 1.8 µm (aspect ratio: 10) + 2.5% by weight of rosin-type resin (modified rosin)) and 99.3% by weight of the resin I-1 obtained in the above (1) were kneaded at 270 to 250°C with a double-screw extruder to give a polyamide resin composition. Observation of the polyamide resin composition with an electron microscope confirmed uniform dispersion of talc in the composition.

Using a secondary injection-molding cylinder (preset temperature 290°C, mold temperature 80°C), a test piece of Fig. 1 was molded, and its initial adhesion strength and adhesion strength after immersion in fuel were measured.

The results are shown in Table 1 along with the fuel permeation test result therein.

### Example I-2:

A polyamide resin composition was produced according to the same operation as in Example I-1, for which, however, 0.7% by weight of Harima Chemicals' granular talc HT-7050 (95.0% by weight of powdery talc having an average particle size of 1.8 µm (aspect ratio: 10) + 5.0% by weight of rosin-type resin (modified rosin}) and 99.3% by weight of the resin I-1 were used in the process of Example I-1(2). Observation of the polyamide resin composition with an electron microscope confirmed uniform dispersion of talc in the composition. The results are shown in Table 1.

### Example I-3:

A polyamide resin composition was produced according to the same operation as in Example I-1, for which, however, 0.3% by weight of Harima Chemicals' granular talc HT-7050 and 99.7% by weight of the resin I-1 were used in the process of Example I-1 (2). Observation of the polyamide resin composition with an electron microscope confirmed uniform dispersion of talc in the composition. The results are shown in Table 1.

### Example I-4:

A polyamide resin composition was produced according to the same operation as in Example I-1, for which, however, 0.5% by weight of Harima Chemicals' granular talc HT-7050 and 99.5% by weight of the resin I-1 were used in the process of Example I-1 (2). Observation of the polyamide resin composition with an electron microscope confirmed uniform dispersion of talc in the composition. The results are shown in Table 1.

### Example I-5:

A polyamide resin composition was produced according to the same operation as in Example I-1, for which, however, 1.0% by weight of Harima Chemicals' granular talc HT-7050 and 99.0% by weight of the resin I-1 were used in the process of Example I-1(2). Observation of the polyamide resin composition with an electron microscope confirmed uniform dispersion of talc in the composition. The results are shown in Table 1.

### Comparative Example I-1:

A polyamide resin composition was produced according to the same operation as in Example I-1, for which, however, 100.0% by weight of the resin I-1 was used in the process of Example I-1(2). The results are shown in Table 1.

### Comparative Example I-2:

A polyamide resin composition was produced according to the same operation as in Example I-1, for which, however, 0.7% by weight of powdery talc having an average particle size of 1.8 µm and 99.3% by weight of the resin I-1 were used in the process of Example I-1 (2). The results are shown in Table 1.

### Comparative Example I-3:

A polyamide resin composition was produced according to the same operation as in Example I-1, for which, however, 0.3% by weight of powdery talc having an average particle size of 1.8 µm and 99.7% by weight of the resin I-1 were used in the process of Example I-1 (2). The results are shown in Table 1.

### Comparative Example I-4:

A polyamide resin composition was produced according to the same operation as in Example I-1, for which, however, 0.5% by weight of powdery talc having an average particle size of 1.8 µm and 99.5% by weight of the resin I-1 were used in the process of Example I-1 (2) . The results are shown in Table 1.

### Comparative Example I-5:

A polyamide resin composition was produced according to the same operation as in Example I-1, for which, however, 1.0% by weight of powdery talc having an average particle size of 1.8 µm and 99.0% by weight of the resin I-1 were used in the process of Example 1-1 (2) . The results are shown in Table 1.

[Table 1]

**Table 1**

| | | Example | | | | | Comparative Example | | | | |
|---|---|---|---|---|---|---|---|---|---|---|---|
| | | I-1 | I-2 | I-3 | I-4 | I-5 | I-1 | I-2 | I-3 | 1-4 | I-5 |
| Aliphatic Polyamide (Resin I-1) (wt.%) | | 99.3 | 99.3 | 99.7 | 99.5 | 99.0 | 100 | 99.3 | 99.7 | 99.5 | 99.0 |
| Aliphatic Polyamide (Resin I-2) (wt.%) | | - | - | - | - | - | - | - | - | - | - |
| Granular Talc (HT-7000) (wt.%) (talc 97.5 wt.% + rosin-type resin 2.5 wt.%) | | 0.7 | - | - | - | - | - | - | - | - | - |
| Granular Talc (HT-7050) (wt.%) (talc 95.0 wt.% + rosin-type resin 5.0 wt.%) | | - | 0.7 | 0.3 | 0.5 | 1.0 | - | - | - | - | - |
| Talc (wt.%) | | - | - | - | - | - | - | 0.7 | 0.3 | 0.5 | 1.0 |
| Fuel Permeation Coefficient (CE-10, 60°C) (g·mm/m2·24 hr) | | 10.2 | 9.1 | 9.9 | 9.4 | 8.4 | 14.3 | 10.4 | 11.3 | 10.8 | 9.7 |
| Weld Temperature (°C) | | 290 | 290 | 290 | 290 | 290 | 290 | 290 | 290 | 290 | 290 |
| Maximum Load for Tensile Adhesion, initial stage (N) | | 639 | 646 | 640 | 638 | 641 | 651 | 652 | 649 | 644 | 647 |
| Maximum Load for Tensile Adhesion, after immersion in fuel (N) | after 400 hours | 527 | 516 | 521 | 514 | 518 | 549 | 496 | 501 | 492 | 495 |
| | after 1000 hours | 507 | 501 | 499 | 503 | 496 | 515 | 445 | 436 | 447 | 429 |
| Elongation in Tensile Adhesion, initial stage (%) | | 133 | 134 | 129 | 137 | 127 | 131 | 137 | 139 | 125 | 122 |
| Elongation in Tensile Adhesion, after immersion in fuel (%) | after 400 hours | 93 | 89 | 103 | 94 | 77 | 114 | 74 | 87 | 78 | 65 |
| | after 1000 hours | 73 | 66 | 78 | 71 | 59 | 81 | 42 | 55 | 47 | 35 |

From Table 1, it is known that the polyamide resin compositions of Examples I-1 to I-5 have a low fuel permeation coefficient and are excellent in fuel permeation resistance, as compared with those of the corresponding Comparative Examples I-1 to I-5.

### Example II-1:

(1) Production of Aliphatic Polyamide Resin II-1:
   20 kg of a polymerization monomer, ε-caprolactam, 0.5 kg of water, 200 g of and 70 g of hexamethylenediamine were put into a 70-liter autoclave, purged with nitrogen, then heated up to 100°C and stirred to give a uniform mixture. Next, this was further stirred at 260°C under 1.7 MPa for 1 hour. Subsequently, the pressure was discharged and, with evaporating moisture from the reactor, this was kept polymerized under normal pressure for 3 hours. After the reaction, the polymer was taken out as strands from the lower nozzle of the reactor, then cooled and cut into polyamide resin pellets. The obtained pellets were processed in hot water at 100°C to remove the unreacted monomer through extraction, and then dried in vacuum to be a sample. The terminal amino group concentration of the obtained polyamide 6 was 100 milliequivalent/kg, and the carboxy group concentration thereof was 30 milliequivalent/kg. The aliphatic polyamide resin in which the terminal amino group concentration is higher than the terminal carboxy group concentration is a resin II-1.
(2) Production of Polyamide Resin Composition:
   0.7% by weight of Harima Chemicals' granular talc HT-7000 (97.5% by weight of powdery talc having an average particle size of 1.8 µm (aspect ratio: 10) + 2.5% by weight of rosin-type resin), and 89.3% by weight of the resin II-1 and 10% by weight of an aromatic polyamide resin (EMS-CHEMIE's G21, polyamide 6T/6I copolymer) were kneaded at 270 to 250°C with a double-screw extruder to give a polyamide resin composition. Observation of the polyamide resin composition with an electron microscope confirmed uniform dispersion of talc in the composition.

Using a secondary injection-molding cylinder (preset temperature 290°C, mold temperature 80°C), a test piece of Fig. 1 was molded, and its initial adhesion strength and adhesion strength after immersion in fuel were measured.

The results are shown in Table 2 along with the fuel permeation test result therein.

### Example II-2:

A polyamide resin composition was produced according to the same operation as in Example II-1, for which, however, 0.7% by weight of Harima Chemicals' granular talc HT-7050 (95.0% by weight of powdery talc having an average particle size of 1.8 µm (aspect ratio: 10) + 5.0% by weight of rosin-type resin), 89.3% by weight of the resin II-1 and 10% by weight of the aromatic polyamide resin (EMS-CHEMIE's G21) were used in the process of Example II-1(2). Observation of the polyamide resin composition with an electron microscope confirmed uniform dispersion of talc in the composition. The results are shown in Table 2.

### Example II-3:

A polyamide resin composition was produced according to the same operation as in Example II-1, for which, however, 0.3% by weight of Harima Chemicals' granular talc HT-7050, 89.7% by weight of the resin II-1 and 10% by weight of the aromatic polyamide resin (EMS-CHEMIE's G21) were used in the process of Example II-1(2). Observation of the polyamide resin composition with an electron microscope confirmed uniform dispersion of talc in the composition. The results are shown in Table 2.

### Example II-4:

A polyamide resin composition was produced according to the same operation as in Example II-1, for which, however, 0.5% by weight of Harima Chemicals' granular talc HT-7050, 89.5% by weight of the resin II-1 and 10% by weight of the aromatic polyamide resin (EMS-CHEMIE's G21) were used in the process of Example II-1(2). Observation of the polyamide resin composition with an electron microscope confirmed uniform dispersion of talc in the composition. The results are shown in Table 2.

### Example II-5:

A polyamide resin composition was produced according to the same operation as in Example II-1, for which, however, 1.0% by weight of Harima Chemicals' granular talc HT-7050, 89.0% by weight of the resin II-1 and 10% by weight of the aromatic polyamide resin (EMS-CHEMIE's G21) were used in the process of Example II-1(2). Observation of the polyamide resin composition with an electron microscope confirmed uniform dispersion of talc in the composition. The results are shown in Table 2.

### Comparative Example II-1:

A polyamide resin composition was produced according to the same operation as in Example II-1, for which, however, 90.0% by weight of the resin II-1 and 10% by weight of the aromatic polyamide resin (EMS-CHEMIE's G21) were used in the process of Example II-1(2). The results are shown in Table 2. Comparative Example II-2:

A polyamide resin composition was produced according to the same operation as in Example II-1, for which, however, 0.7% by weight of powdery talc having an average particle size of 1.8 µm, 89.3% by weight of the resin II-1 and 10% by weight of the aromatic polyamide resin (EMS-CHEMIE's G21) were used in the process of Example II-1(2). The results are shown in Table 2.

### Comparative Example II-3:

A polyamide resin composition was produced according to the same operation as in Example II-1, for which, however, 0.3% by weight of powdery talc having an average particle size of 1.8 µm, 89.7% by weight of the resin II-1 and 10% by weight of the aromatic polyamide resin (EMS-CHEMIE's G21) were used in the process of Example II-1(2). The results are shown in Table 2.

### Comparative Example II-4:

A polyamide resin composition was produced according to the same operation as in Example II-1, for which, however, 0.5% by weight of powdery talc having an average particle size of 1.8 µm, 89.5% by weight of the resin II-1 and 10% by weight of the aromatic polyamide resin (EMS-CHEMIE's G21) were used in the process of Example II-1(2). The results are shown in Table 2.

### Comparative Example II-5:

A polyamide resin composition was produced according to the same operation as in Example II-1, for which, however, 1.0% by weight of powdery talc having an average particle size of 1.8 µm, 89.0% by weight of the resin II-1 and 10% by weight of the aromatic polyamide resin (EMS-CHEMIE's G21) were used in the process of Example II-1(2). The results are shown in Table 2.

[Table 2]

**Table 2**

| | | Example | | | | | Comparative Example | | | | |
|---|---|---|---|---|---|---|---|---|---|---|---|
| | | II-1 | II-2 | II-3 | II-4 | II-5 | II-1 | II-2 | II-3 | II-4 | II-5 |
| Aliphatic Polyamide (Resin II-1) (wt.%) | | 89.3 | 89.3 | 89.7 | 89.5 | 89.0 | 90 | 89.3 | 89.7 | 89.5 | 89.0 |
| Aliphatic Polyamide (Resin II-2) (wt.%) | | - | - | - | - | - | - | - | - | - | - |
| Aromatic Polyamide EMS-CHEMIE's G21) (wt.%) | | 10 | 10 | 10 | 10 | 10 | 10 | 10 | 10 | 10 | 10 |
| Granular Talc (HT-7000) (wt.%) (talc 97.5 wt.% + rosin-type resin 2.5 wt.%) | | 0.7 | - | - | - | - | - | - | - | - | - |
| Granular Talc (HT-7050) (wt.%) (talc 95.0 wt.% + rosin-type resin 5.0 wt.%) | | - | 0.7 | 0.3 | 0.5 | 1.0 | - | - | - | - | - |
| Talc (wt.%) | | - | - | - | - | - | - | 0.7 | 0.3 | 0.5 | 1.0 |
| Fuel Permeation Coefficient (CE-10,60°C) (g·mm/m2·24 hr) | | 5.6 | 4.5 | 5.4 | 4.8 | 3.9 | 9.7 | 5.8 | 6.8 | 6.2 | 5.2 |
| Weld Temperature (°C) | | 290 | 290 | 290 | 290 | 290 | 290 | 290 | 290 | 290 | 290 |
| Maximum Load for Tensile Adhesion, initial stage (N) | | 608 | 615 | 641 | 619 | 615 | 624 | 623 | 657 | 628 | 622 |
| Maximum Load for Tensile Adhesion, after immersion in fuel (N) | after 400 hours | 497 | 502 | 499 | 505 | 501 | 480 | 498 | 507 | 498 | 502 |
| | after 1000 hours | 460 | 467 | 473 | 462 | 466 | 445 | 455 | 461 | 452 | 460 |
| Elongation in Tensile Adhesion, initial stage (%) | | 91 | 97 | 93 | 95 | 99 | 92 | 94 | 92 | 92 | 101 |
| Elongation in Tensile Adhesion, after immersion in fuel (%) | after 400 hours | 64 | 60 | 74 | 62 | 51 | 82 | 45 | 59 | 49 | 37 |
| | after 1000 hours | 51 | 43 | 54 | 47 | 36 | 60 | 23 | 35 | 27 | 17 |

From Table 2, it is known that the polyamide resin compositions of Examples II-1 to II-5 have a low fuel permeation coefficient and are excellent in fuel permeation resistance, as compared with those of the corresponding Comparative Examples II-1 to II-5.

### [Industrial Applicability]

The polyamide resin composition of the present invention has high weld strength and good fuel gas barrier properties, not detracting from the properties inherent to polyamide resins, and is favorable for use in large-size molded articles and parts having a complicated shape according to a multicolor molding method or the like, not relying upon any specific molding machine or post-processing method.

## Claims

1. A polyamide resin composition comprising at least 85% by weight of an aliphatic polyamide resin (A-1) in which the concentration of the terminal amino group is higher than the concentration of the terminal carboxy group, from 0.01 to 10% by weight of talc (B) dispersed in the aliphatic polyamide resin (A-1), and from 0.0001 to 1% by weight of a dispersing agent (C), wherein the dispersing agent (C) is a rosin.

2. A method for producing a polyamide resin composition, which comprises mixing from 0.01 to 10% by weight of talc (B) and from 0.0001 to 1% by weight of a dispersing agent (C), followed by mixing it with at least 85% by weight of an aliphatic polyamide resin (A-1) in which the concentration of the terminal amino group is higher than the concentration of the terminal carboxy group, wherein the dispersing agent (C) is a rosin.

3. A polyamide resin composition comprising from 75 to 95% by weight of an aliphatic polyamide resin (A-1) in which the concentration of the terminal amino group is higher than the concentration of the terminal carboxy group, from 1 to 20% by weight of an aromatic polyamide resin (A-2), from 0.01 to 10% by weight of talc (B) dispersed in the polyamide resins (A-1) and (A-2), and from 0.0001 to 1 % by weight of a dispersing agent (C), wherein the dispersing agent (C) is a rosin.

4. A method for producing a polyamide resin composition, which comprises mixing from 0.01 to 10% by weight of talc (B) and from 0.0001 to 1% by weight of a dispersing agent (C), followed by mixing it with from 75 to 95% by weight of an aliphatic polyamide resin (A-1) in which the concentration of the terminal amino group is higher than the concentration of the terminal carboxy group and from 1 to 20% by weight of an aromatic polyamide resin (A-2), wherein the dispersing agent (C) is a rosin.

5. The polyamide resin composition according to claim 1 or 3, wherein the terminal amino group concentration in the aliphatic polyamide resin (A-1) is at least 50 milliequivalents per kg of the polymer.

6. The polyamide resin composition according to claim 1 or 3, wherein the average particle size of talc (B) is from 0.1 to 20 µm and the aspect ratio thereof is at least 3.

7. A fuel part comprising the polyamide resin composition of claim 1 or 3.

8. A fuel part in which the polyamide resin composition of claim 1 or 3 is welded to a modified polyolefin resin modified with an unsaturated carboxylic acid or its derivative.

## Patentansprüche

1. Polyamidharz-Zusammensetzung, umfassend mindestens 85 Gew.-% eines aliphatischen Polyamidharzes (A-1), bei dem die Konzentration der terminalen Aminogruppen höher ist als die Konzentration der terminalen Carboxygruppen, 0,01 bis 10 Gew.-% Talk (B), dispergiert im aliphatischen Polyamidharz (A-1), und 0,0001 bis 1 Gew.-% eines Dispergiermittels (C), wobei das Dispergiermittel (C) ein Rosin ist.

2. Verfahren zur Herstellung einer Polyamidharz-Zusammensetzung, welches Mischen von 0,01 bis 10 Gew.-% Talk (B) und 0,0001 bis 1 Gew.-% eines Dispergiermittels (C) umfasst, gefolgt vom Mischen mit mindestens 85 Gew.-% eines aliphatischen Polyamidharzes (A-1), bei dem die Konzentration der terminalen Aminogruppen höher ist als die Konzentration der terminalen Carboxygruppen, wobei das Dispergiermittel (C) ein Rosin ist.

3. Polyamidharz-Zusammensetzung, umfassend 75 bis 95 Gew.-% eines aliphatischen Polyamidharzes (A-1), bei dem die Konzentration der terminalen Aminogruppen höher ist als die Konzentration der terminalen Carboxygruppen, 1 bis 20 Gew.-% eines aromatischen Polyamidharzes (A-2), 0,01 bis 10 Gew.-% in dem Polyamidharz (A-1) und (A-2) dispergierten Talk (B), und 0,0001 bis 1 Gew.-% eines Dispergiermittels (C), wobei das Dispergiermittel (C) ein Rosin ist.

4. Verfahren zur Herstellung einer Polyamidharz-Zusammensetzung, welches Mischen von 0,01 bis 10 Gew.-% Talk (B) und 0,0001 bis 1 Gew.-% eines Dispergiermittels (C), gefolgt von Mischen mit 75 bis 95 Gew.-% eines aliphatischen Polyamidharzes (A-1), in dem die Konzentration der terminalen Aminogruppen höher ist als die Konzentration der terminalen Carboxygruppen, und 1 bis 20 Gew.-% eines aromatischen Polyamidharzes (A-2) umfasst, wobei das Dispergiermittel (C) ein Rosin ist.

5. Polyamidharz-Zusammensetzung nach Anspruch 1 oder 3, wobei die Konzentration der terminalen Aminogruppen im aliphatischen Polyamidharz (A-1) mindestens 50 Milliäquivalente pro kg des Polymeren beträgt.

6. Polyamidharz-Zusammensetzung nach Anspruch 1 oder 3, wobei die mittlere Partikelgröße von Talk (B) 0,1 bis 20 µm beträgt und das Längenverhältnis davon mindestens 3 beträgt.

7. Treibstoffteil, umfassend die Polyamidharz-Zusammensetzung nach Anspruch 1 oder 3.

8. Treibstoffteil, bei dem die Polyamidharz-Zusammensetzung nach Anspruch 1 oder 3 mit einem modifizierten Polyolefinharz verschweißt wird, das mit einer ungesättigten Carbonsäure oder einem Derivat davon modifiziert ist.

## Revendications

1. Composition de résine polyamide comprenant au moins 85% en poids d'une résine polyamide aliphatique (A-1) dans laquelle la concentration du groupe amino terminal est supérieure à la concentration du groupe carboxy terminal, de 0,01 à 10% en poids de talc (B) dispersé dans la résine polyamide aliphatique (A-1), et de 0,0001 à 1% en poids d'un agent dispersant (C), où l'agent dispersant (C) est une colophane.

2. Procédé de production d'une composition de résine polyamide, qui comprend le mélange de 0,01 à 10% en poids de talc (B) et de 0,0001 à 1% en poids d'un agent dispersant (C), suivi de son mélange avec au moins 85% en poids d'une résine polyamide aliphatique (A-1) dans laquelle la concentration du groupe amino terminal est supérieure à la concentration du groupe carboxy terminal, où l'agent dispersant (C) est une colophane.

3. Composition de résine polyamide comprenant 75 à 95% en poids d'une résine polyamide aliphatique (A-1) dans laquelle la concentration du groupe amino terminal est supérieure à la concentration du groupe carboxy terminal, de 1 à 20% en poids d'une résine polyamide aromatique (A-2), de 0,01 à 10% en poids de talc (B) dispersé dans les résines polyamides (A-1) et (A-2), et de 0,0001 à 1% en poids d'un agent dispersant (C), où l'agent dispersant (C) est une colophane.

4. Procédé de production d'une composition de résine polyamide, qui comprend le mélange de 0,01 à 10% en poids de talc (B) et de 0,0001 à 1% en poids d'un agent dispersant (C), suivi de son mélange avec de 75 à 96% en poids d'une résine polyamide aliphatique (A-1) dans laquelle la concentration du groupe amino terminal est supérieure à la concentration du groupe carboxy terminal et de 1 à 20% en poids d'une résine polyamide aromatique (A-2), où l'agent dispersant (C) est une colophane.

5. Composition de résine polyamide selon la revendication 1 ou 3, dans laquelle la concentration du groupe amino terminal dans la résine polyamide aliphatique (A-1) est supérieure ou égale à 50 milliéquivalents par kg du polymère.

6. Composition de résine polyamide selon la revendication 1 ou 3, dans laquelle la dimension moyenne des particules de talc (B) est de 0,1 à 20 µm et son rapport d'aspect est supérieur ou égal à 3.

7. Composant de carburant comprenant la composition de résine polyamide de la revendication 1 ou 3.

8. Composant de carburant dans laquelle la composition de résine polyamide de la revendication 1 ou 3 est soudée à une résine de polyoléfine modifiée par un acide carboxylique insaturé ou son dérivé.
